# EUROPEAN PATENT APPLICATION

(11) **EP 4 019 141 A1**
(43) Date of publication of application: **29.06.2022**
(21) Application number: 21210150.5
(22) Date of filing: 24.11.2021
(51) Int. Cl.: B03C 3/01, B03C 3/41, B03C 3/47

(54) **PRODUCT REMOVING METHOD, FLUX REMOVING METHOD, AND PRODUCT REMOVING APPARATUS**

(30) Priority: 24.12.2020 JP 2020215299
(71) Applicant: Panasonic Intellectual Property Management Co., Ltd., Osaka-shi, Osaka 540-6207 (JP)
(72) Inventor: MATSUMOTO, Yoshiki, Osaka, 540-6207 (JP); YAMAGUCHI, Naoshi, Osaka, 540-6207 (JP); KANDA, Toshiro, Osaka, 540-6207 (JP); TAKANO, Yasuyuki, Osaka, 540-6207 (JP)
(74) Representative: Vigand, Philippe

(57) **Abstract**

A product removing method of introducing an atmospheric gas into a product remover including a corona discharge space to remove a product from the atmospheric gas, the product being generated inside a processing chamber under a low oxygen atmosphere, the method including: mixing the atmospheric gas with a high electric resistance gas to generate a mixed gas in a pipe or the corona discharge space, the pipe being connected between the processing chamber and the corona discharge space, the atmospheric gas being discharged from the processing chamber via the pipe, the high electric resistance gas having an electric resistance higher than an electric resistance of the atmospheric gas; and removing the product from the mixed gas by a corona discharge method in the corona discharge space into which the mixed gas is introduced via the pipe or in which the mixed gas is generated.

## Description

### BACKGROUND

### 1. Technical Field

The present invention relates to a method for removing a product generated in a processing chamber, a flux removing method, and a product removing apparatus.

### 2. Description of the Related Art

In related art, when electronic components are soldered to a circuit board, a reflow furnace, a flow vessel, or the like is used. For example, the reflow furnace includes a preheat zone in which a solvent is mainly volatilized from a solder paste applied to the circuit board; a primary heat zone in which a rosin component, which is a main component of a flux component, is evaporated, and a solder powder is melted; and a cooling zone in which the solder is solidified, and the circuit board itself is cooled. The soldering process includes a process of applying the solder paste to the circuit board, placing the electronic components on the solder paste, and then conveying the circuit board to the reflow furnace. The reflow furnace heats and melts the solder paste, so that the circuit board and the electronic components are electrically connected to each other. In the related art, the soldering process is performed in a state in which the inside of the reflow furnace is in an atmospheric environment. However, in recent years, in order to prevent oxidation of the solder and the electronic components, there is an increasing tendency to maintain the inside of the reflow furnace at a low oxygen concentration. An example of a method of maintaining the inside of the reflow furnace at the low oxygen concentration is a method of supplying an inert gas into the reflow furnace. In most cases, the supplied inert gas is nitrogen gas.

The solder paste applied to the circuit board includes the rosin component which is the main component of the flux component. In the primary heat zone, the rosin component evaporates inside the furnace in a form of rosin particles when being exposed to a high temperature. These rosin particles condense on portions having a relatively low temperature inside the furnace that includes, for example, a conveyor for conveying the circuit board into the furnace, inner wall surfaces of the furnace, a ceiling surface, a nozzle plate, a cooling plate, and a labyrinth. When the temperature further drops, the rosin particles condensing on these portions of the furnace turn into a solid or a sticky rosin component. Such a solid or sticky rosin component causes problems when being attached to constituent components of the reflow furnace in large quantity.

For example, when such a solid or sticky rosin component is attached to the conveyer in large quantity, the circuit board sticks to the conveyer, and cannot separate from the conveyer when exiting the furnace, which causes problems that the circuit board is wound around a sprocket of the conveyor and the circuit board is damaged. Alternatively, when such a solid or sticky rosin component is attached to the inner wall surfaces of the furnace or the ceiling surface in large quantity, deposited fume solid may fall on the conveying circuit board, and stain the circuit board.

Therefore, methods and apparatuses intended to remove the flux component in a furnace are proposed to solve the problems caused by the attached solid or sticky rosin component.

For example, Japanese Patent No. 5366395 proposes an apparatus for removing the flux component. In this apparatus, an atmospheric gas generated in a processing chamber of a reflow furnace is sucked into a product remover installed outside the furnace, and in the product remover, the sucked atmospheric gas is cooled by a heat exchange method to remove the flux component.

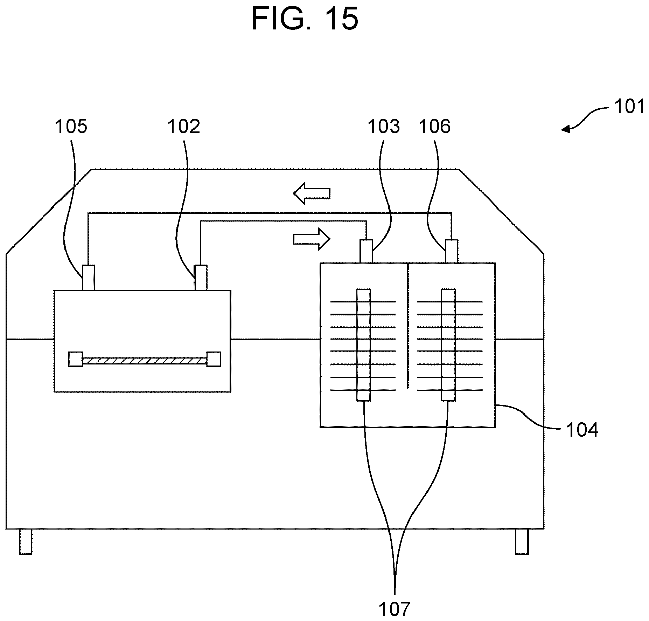

FIG. 15 is diagram showing reflow furnace 101 on a cross section of reflow furnace 101 taken along a plane orthogonal to a conveying direction of a circuit board. As shown in FIG. 15, a processing chamber of reflow furnace 101 includes processor side outlet 102 through which an atmospheric gas generated in the processing chamber is discharged. Processor side outlet 102 is connected to remover side inlet 103 provided on product remover 104. An atmospheric gas having flux generated in the processing chamber is introduced into product remover 104. Radiators 107 are installed in product remover 104. In product remover 104, the introduced atmospheric gas is cooled by radiators 107 to precipitate and remove a flux component from the atmospheric gas.

For example, JP-A-2020-1054 proposes an apparatus for removing a flux component. In this apparatus, an atmospheric gas generated in a reflow furnace is sucked into a product remover installed outside the furnace, and in the product remover, rosin particles are separated and removed from the atmospheric gas by an electrostatic precipitation scheme to remove the flux component.

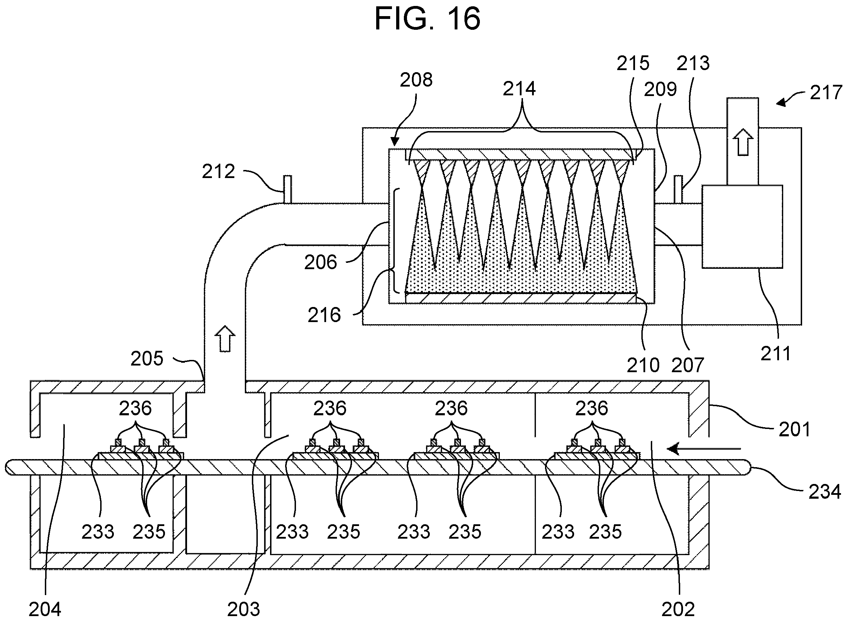

FIG. 16 is a view of reflow furnace 201 and flux removing apparatus 217 on a cross section when reflow furnace 201 of JP-A-2020-1054 is cut along a plane parallel to a vertical direction with respect to a conveying direction of a circuit board. As shown in FIG. 16, reflow furnace 201 includes: preheat zone 202 in which a solvent is mainly volatilized from solder paste 235 applied to circuit board 233; primary heat zone 203 in which a rosin component, which is a main component of a flux component, is evaporated, and a solder powder is melted; and cooling zone 204 in which the solder is solidified and circuit board 233 itself is cooled. In JP-A-2020-1054, processor side outlet 205 toward product remover 208 is provided in a zone between primary heat zone 203 contaminated most by the flux in the furnace and cooling zone 204. Processor side outlet 205 is connected to remover side inlet 206 via a pipe.

Product remover 208 includes corona discharger 209, ground side electrode plate 210, and discharge mechanism 211. Removing apparatus 217 sucks the atmospheric gas inside reflow furnace 201 into product remover 208 by discharge mechanism 211, and exhausts a gas from which the product is removed to the outside from remover side outlet 207. Alternatively, the gas from which the product is removed may be returned to the inside of reflow furnace 201.

When an atmospheric gas containing rosin particles generated in reflow furnace 201 is introduced into product remover 208, the rosin particles are negatively charged by corona discharge generated by corona discharger 209 under a high voltage. The negatively charged rosin particles are attracted to ground side electrode plate 210 by an electrostatic attractive force and attached to a ground side electrode. In this way, the flux component is removed.

### SUMMARY

In one aspect of the present invention, a product removing method of introducing an atmospheric gas into a product remover including a corona discharge space to remove a product from the atmospheric gas, the product being generated inside a processing chamber under a low oxygen atmosphere, the method including: mixing the atmospheric gas with a high electric resistance gas to generate a mixed gas in a pipe or the corona discharge space, the pipe being connected between the processing chamber and the corona discharge space, the atmospheric gas being discharged from the processing chamber via the pipe, the high electric resistance gas having an electric resistance higher than an electric resistance of the atmospheric gas; and removing the product from the mixed gas by a corona discharge method in the corona discharge space into which the mixed gas is introduced via the pipe or in which the mixed gas is generated.

In one aspect of the present invention, a product removing apparatus configured to introduce an atmospheric gas including a product generated inside a processing chamber under a low oxygen atmosphere so as to remove the product included in the atmospheric gas, the product removing apparatus including: a product remover including a corona discharge space in which the product is removed; a pipe connecting the processing chamber and the product remover; and a supplier installed on a path of the pipe or the product remover, and configured to supply a high electrical resistance gas having an electric resistance higher than an electric resistance of the atmospheric gas to the pipe or the corona discharge space. A mixed gas is generated by mixing the atmospheric gas and the high electric resistance gas, and the product is removed from the mixed gas in the corona discharge space that is introduced via the pipe or generated in the corona discharge space.

### BRIEF DESCRIPTION OF THE DRAWINGS

FIG. 1A is a diagram showing a product removing apparatus according to a first embodiment of the present invention and a removal system including the product removing apparatus;
FIG. 1B is a diagram showing a product removing apparatus according to a first modification of the first embodiment of the present invention and a removal system including the product removing apparatus;
FIG. 2 is a diagram showing an experimental apparatus according to the first embodiment of the present invention;
FIG. 3 is a graph showing a relationship between an oxygen concentration and a voltage value, which is an experimental result according to the first embodiment of the present invention;
FIG. 4 is a graph showing a relationship between the voltage value and a lighting rate, which is an experimental result according to the first embodiment of the present invention;
FIG. 5 is a graph showing a relationship between the lighting rate and a collection rate, which is an experimental result according to the first embodiment of the present invention;
FIG. 6 is a graph showing a relationship between the oxygen concentration and a removal rate, which is an experimental result according to the first embodiment of the present invention;
FIG. 7 is a graph showing a relationship between the voltage value and the removal rate, which is an experimental result according to the first embodiment of the present invention;
FIG. 8 is a diagram showing a product removing apparatus according to a second modification of the first embodiment of the present invention and a removal system including the product removing apparatus;
FIG. 9 is a diagram showing a product removing apparatus according to a third modification of the first embodiment of the present invention and a removal system including the product removing apparatus;
FIG. 10 is a diagram showing a product removing apparatus according to a fourth modification of the first embodiment of the present invention and a removal system including the product removing apparatus;
FIG. 11 is a diagram showing a product removing apparatus according to a second embodiment of the present invention and a removal system including the product removing apparatus;
FIG. 12 is a diagram showing a product removing apparatus according to a first modification of the second embodiment of the present invention and a removal system including the product removing apparatus;
FIG. 13 is a diagram showing a product removing apparatus according to a third embodiment of the present invention and a removal system including the product removing apparatus;
FIG. 14 is a diagram showing a product removing apparatus according to a fourth embodiment of the present invention and a removal system including the product removing apparatus;
FIG. 15 is a diagram showing a flux removing apparatus according to a technique in the related art;
FIG. 16 is a diagram showing a flux removing apparatus according to a technique in the related art; and
FIG. 17 is a diagram showing a difference in flux collection rate in an electrostatic precipitation scheme depending on an atmosphere in a reflow furnace.

### DETAILED DESCRIPTION

In a product removing apparatus in an electrostatic precipitation scheme as in the related-art method or configuration, when an atmosphere inside a reflow furnace is a low oxygen atmosphere, a removal rate of a product decreases.

Actually, the present inventor has confirmed that the removal rate of the product in the electrostatic precipitation scheme is different between a case where the atmosphere inside the reflow furnace is an atmospheric environment and the case where the atmosphere inside the reflow furnace is the low oxygen atmosphere. As shown in FIG. 16, the present inventor installed inlet side measurement port 212 in the vicinity of remover side inlet 206 of the product removing apparatus. The present inventor further installed outlet side measurement port 213 on remover side outlet 207 of the product removing apparatus. The present inventor connected a real-time engine exhaust particle sizer EEPS 3090 manufactured by TSI to each of measurement ports 212, 213. The present inventor measured a particle weight per unit volume of an atmospheric gas on an inlet side and a particle weight per unit volume of the atmospheric gas on an outlet side, and calculated a flux removal amount based on a difference between the measured particle weights as a collection rate. An oxygen concentration was 21% in the atmospheric environment and 0.2% in the low oxygen atmosphere.

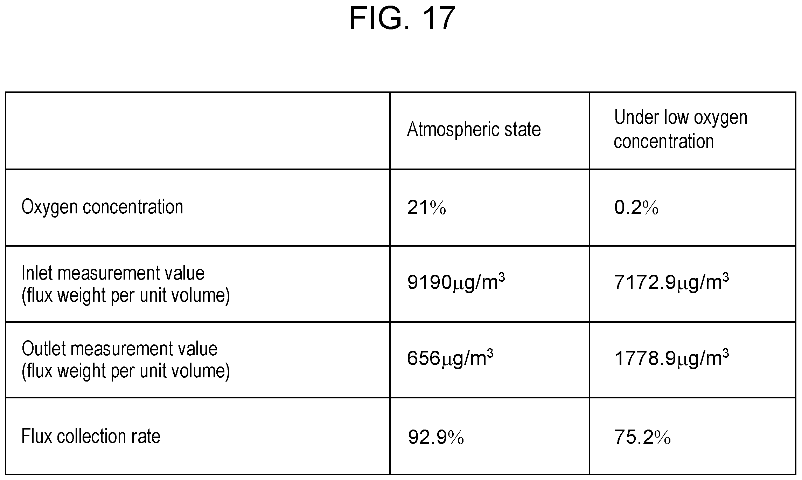

FIG. 17 is a diagram showing a difference in flux collection rate in the electrostatic precipitation scheme depending on the atmosphere in the reflow furnace. The flux collection rate in the atmospheric environment is 92.9%. The flux collection rate in the low oxygen atmosphere is 75.2%.

That is, in the product removing apparatus in the electrostatic precipitation scheme as shown in FIG. 16, a cleaning effect in the low oxygen atmosphere is lower than a cleaning effect in the atmospheric environment by 17.7 points. That is, when the gas from which the product is removed is exhausted to the outside from remover side outlet 207, contamination in which a reaction product is attached to the inside of a pipe duct for outdoor exhausting is caused, and when the gas is returned to the inside of the furnace, a cleaning effect of the inside of a processing chamber is reduced.

Accordingly, an object of the present invention is to solve the above problems and to provide a product removing method, a flux removing method, and a product removing apparatus, which improve removal efficiency of a product. Accordingly, for example, when the gas is exhausted to the outside from the removing apparatus, it is possible to prevent the contamination in which the reaction product is attached to the inside of the pipe duct for outdoor exhausting. When the gas is returned from the removing apparatus to the furnace, the cleaning effect of the inside of the processing chamber can be improved.

Hereinafter, embodiments and modifications thereof according to the present invention will be described in detail with reference to the drawings.

### First Embodiment

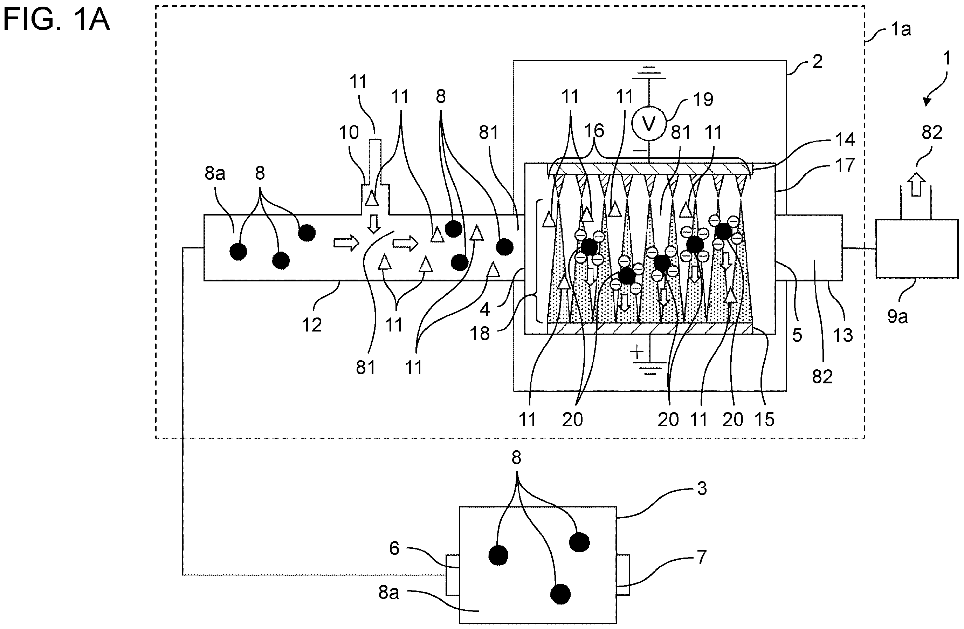

FIG. 1A is a diagram showing a product removing apparatus according to a first embodiment of the present invention and a removal system including the product removing apparatus. Product removing apparatus 1a according to the first embodiment of the present invention includes at least product remover 2, inlet side pipe 12, and supplier 10. As an example, FIG. 1A shows an example in which product removing apparatus 1a further includes outlet side pipe 13 and suction device 9a. In addition, FIG. 1A shows an example in which product removal system 1 includes product removing apparatus 1a and product processor 3.

Product processor 3 includes processor side outlet 6 and processor side inlet 7 that allow the inside and the outside of product processor 3 to communicate with each other. One end of inlet side pipe 12 is connected to processor side outlet 6. The inside of product processor 3 is in the low oxygen atmosphere. In the first embodiment, the low oxygen atmosphere means that an oxygen concentration per unit volume is 0 ppm or more and less than 2000 ppm. In the first embodiment, the inside of product processor 3 is, for example, in a vacuum or an atmosphere of an inert gas such as nitrogen. As will be described later, product 8 is generated inside product processor 3 in the low oxygen atmosphere. Product 8 is included in atmospheric gas 8a inside product processor 3. Product processor 3 may be any processor as long as any product that can be included in atmospheric gas 8a is generated inside product processor 3. That is, by performing a predetermined process inside product processor 3, product 8 that can be included in atmospheric gas 8a is generated. The predetermined process is, for example, a process in which some actions are applied to a workpiece in a space to achieve a required purpose, and as a specific example, a process in which solder applied to a circuit board is solidified by heat treatment, or the like. At this time, product processor 3 is, for example, the reflow furnace, a flow furnace, or a batch furnace, but product processor 3 according to the present embodiment is not limited to the reflow furnace, the flow furnace, or the batch furnace. In addition, as an example, product 8 is flux, more specifically, rosin particles or the like. Atmospheric gas 8a having product 8 generated in product processor 3 is introduced into product remover 2 via inlet side pipe 12 by suction.

Product remover 2 includes corona discharger 17 to remove product 8 in atmospheric gas 8a. Corona discharger 17 is provided with remover side inlet 4 and remover side outlet 5. The other end of inlet side pipe 12 is connected to remover side inlet 4. One end of outlet side pipe 13 is connected to remover side outlet 5. Corona discharger 17 includes, inside corona discharger 17, power supply side electrode plate 14 and ground side electrode plate 15 which are disposed in parallel and facing to each other with a space therebetween. In the first embodiment, a material of power supply side electrode plate 14 and ground side electrode plate 15 is, for example, a metal that can be used as a general structural member, such as copper, aluminum, stainless steel, or brass. Power supply side electrode plate 14 is connected to power supply 19. Ground side electrode plate 15 is connected to the ground. A plurality of electrode needles 16 are provided on a surface of power supply side electrode plate 14 that faces ground side electrode plate 15, so that distal ends of the needles face ground side electrode plate 15. Corona discharge space 18 is provided between the plurality of electrode needles 16 and ground side electrode plate 15.

Corona discharge space 18 of corona discharger 17 receives mixed gas 81 including atmospheric gas 8a and high electrical resistance gas 11. Details of high electrical resistance gas 11 will be described later. When a negative high voltage is applied from power supply 19 to corona discharger 17, corona discharge occurs from the distal ends of the plurality of electrode needles 16. Due to the corona discharge, product 8 included in mixed gas 81 introduced into corona discharge space 18 is negatively charged (that is, negatively charged product 20 is formed). In corona discharge space 18, negatively charged product 20 is attracted by an electrostatic attractive force so as to be attached to ground side electrode plate 15, and is removed from mixed gas 81.

Supplier 10 is connected to a middle portion of inlet side pipe 12 in order to supply high electrical resistance gas 11 into inlet side pipe 12. In FIG. 1A, in order to facilitate understanding, high electrical resistance gas 11 is schematically illustrated in a shape of triangle, but actual high electrical resistance gas 11 is not dispersed in a lump manner such as in the shape of triangle, and a boundary thereof is not determined. In the first embodiment, high electric resistance gas 11 is a gas having an electric resistance higher than that of atmospheric gas 8a, and is, for example, air atmosphere (that is, air under the atmospheric pressure), oxygen, a diatomic molecular gas having a double bond or less, a rare gas, or the like. In the first embodiment, when high electrical resistance gas 11 is the air atmosphere, for example, supplier 10 can be configured with an open valve having an adjustment valve, or the like, and an inflow amount of the air atmosphere can be adjusted by the adjustment valve. Atmospheric gas 8a and high electrical resistance gas 11 supplied from supplier 10 are mixed in inlet side pipe 12 in the vicinity of a portion at which supplier 10 and inlet side pipe 12 are connected, and mixed gas 81 is generated. That is, an electric resistance of mixed gas 81 is higher than the electric resistance of atmospheric gas 8a.

Mixed gas 81 generated inside inlet side pipe 12 is introduced into corona discharge space 18 of corona discharger 17 via inlet side pipe 12 by suction. By introducing mixed gas 81 into corona discharge space 18, the electric resistance is increased as compared with a case in which only atmospheric gas 8a is used, so that the voltage applied to corona discharger 17 can be increased, and the product can be easily removed. As a result, it is possible to improve removal efficiency of the product in corona discharge space 18.

In the first embodiment, suction device 9a is connected to the other end of outlet side pipe 13 connected to remover side outlet 5 of corona discharger 17. By the suction of suction device 9a, atmospheric gas 8a including product 8 generated inside product processor 3 is discharged from product processor 3 to the inside of inlet side pipe 12 toward corona discharge space 18. By the suction of suction device 9a, high electrical resistance gas 11 is supplied from supplier 10 to the inside of inlet side pipe 12 and mixed with atmospheric gas 8a. Further, by the suction of suction device 9a, mixed gas 81 generated inside inlet side pipe 12 is introduced into corona discharge space 18 of corona discharger 17. In addition, in the first embodiment, by the suction of suction device 9a, post-removal gas 82 to be described later is discharged from corona discharger 17 to outlet side pipe 13 via remover side outlet 5. Post-removal gas 82 discharged to outlet side pipe 13 is sucked by suction device 9a and discharged to the outside of product removing apparatus 1a. Post-removal gas 82 may be discharged to the outside and discarded or, as will be described later as a modification, may be returned to the processing chamber in a return process of returning post-removal gas 82 to processor side inlet 7 of product processor 3 or the like. In the first embodiment, suction device 9a is, for example, an suction pump or an suction fan. Alternatively, suction device 9a may be, for example, a mechanism that discharges the atmospheric gas from product processor 3 by using air circulation in a space of product processor 3.

Hereinafter, a method of removing product 8 by removing apparatus 1a according to the first embodiment will be described with reference to FIG. 1A.

First, product 8 is generated by performing the predetermined process in product processor 3. Next, by the suction of suction device 9a, atmospheric gas 8a including product 8 is discharged from the inside of product processor 3 to inlet side pipe 12 toward corona discharge space 18 via processor side outlet 6. By the suction of suction device 9a as described above, a pressure inside inlet side pipe 12 is maintained at a negative pressure. Simultaneously with the discharge of atmospheric gas 8a, by the suction of suction device 9a, high electrical resistance gas 11 is supplied into inlet side pipe 12 from supplier 10 connected to the middle portion of inlet side pipe 12.

As a result, atmospheric gas 8a and high electrical resistance gas 11 are mixed inside inlet side pipe 12 in the vicinity of the supplier, and mixed gas 81 is generated. Mixed gas 81 generated inside inlet side pipe 12 is introduced from inlet side pipe 12 to corona discharger 17 via remover side inlet 4 of corona discharger 17 by the suction of suction device 9a.

In corona discharger 17, by the suction of suction device 9a, mixed gas 81 is introduced into corona discharge space 18 between the plurality of electrode needles 16 connected to power supply side electrode plate 14 and ground side electrode plate 15, and passes through corona discharge space 18 toward remover side outlet 5.

At this time, when the negative high voltage is applied from power supply 19 to corona discharger 17, the corona discharge occurs from the distal ends of the plurality of electrode needles 16, and electrons are emitted toward ground side electrode plate 15. A potential difference between power supply side electrode plate 14 and ground side electrode plate 15 when the corona discharge occurs differs depending on the atmosphere between these two electrode plates. As the potential difference between these two electrodes increases, the corona discharge is more likely to occur, and product 8 is more likely to be removed. That is, by introducing mixed gas 81 having the electric resistance higher than that of atmospheric gas 8a into corona discharger 17, it is possible to further increase the applied voltage as compared with the case in which only atmospheric gas 8a is introduced into corona discharger 17, and it is possible to increase the potential difference in corona discharger 17 inside product remover 2. Therefore, the removal efficiency of product 8 is improved. As a result, when post-removal gas 82 is exhausted to the outside from removing apparatus 1a, a cleaning effect of the inside of the pipe duct for outdoor exhausting is improved. In addition, when post-removal gas 82 is returned to the processing chamber in the return process of returning post-removal gas 82 to processor side inlet 7 of product processor 3 or the like, a cleaning effect of the inside of product processor 3 can be improved.

More specifically, when high electrical resistance gas 11 is the air atmosphere, air components between the electrodes are ionized by the corona discharge. Ions having a negative charge are attached to product 8 to negatively charge product 8 (that is, to form negatively charged product 20). Negatively charged product 20 is attracted to ground side electrode plate 15 by the electrostatic attractive force. As a result, negatively charged product 20 is attached to and deposited on ground side electrode plate 15 to be removed from mixed gas 81. Post-removal gas 82, which is a gas after negatively charged product 20 is removed from mixed gas 81, is sucked by suction device 9a, and is discharged from corona discharger 17 to outlet side pipe 13 via remover side outlet 5. Post-removal gas 82 discharged to outlet side pipe 13 is sucked by suction device 9a and discharged to the outside of product removing apparatus 1a.

According to the product removing method and the product removing apparatus according to the first embodiment of the present invention, by supplying high electrical resistance gas 11 from supplier 10, the applied voltage in corona discharger 17 inside product remover 2 can be further increased to increase the potential difference regardless of the atmosphere inside product processor 3. Therefore, negatively charged product 20 is easily removed. That is, the removal efficiency of product 8 before being negatively charged is improved. As a result, when post-removal gas 82 is exhausted to the outside from removing apparatus 1a, a cleaning effect of the inside of the pipe duct for outdoor exhausting is improved. In addition, when post-removal gas 82 is returned to the processing chamber in the return process of returning post-removal gas 82 to processor side inlet 7 of product processor 3 or the like, a cleaning effect of the inside of product processor 3 can be improved.

According to the product removing apparatus and the product removing method according to the first embodiment of the present invention, high electrical resistance gas 11 is the air atmosphere, and supplier 10 is the open valve having the adjustment valve. According to such a configuration, since the pressure inside inlet side pipe 12 is the negative pressure, a desired amount of the air atmosphere can be supplied to inlet side pipe 12 only by adjusting the adjustment valve of the open valve having the adjustment valve.

### First Modification

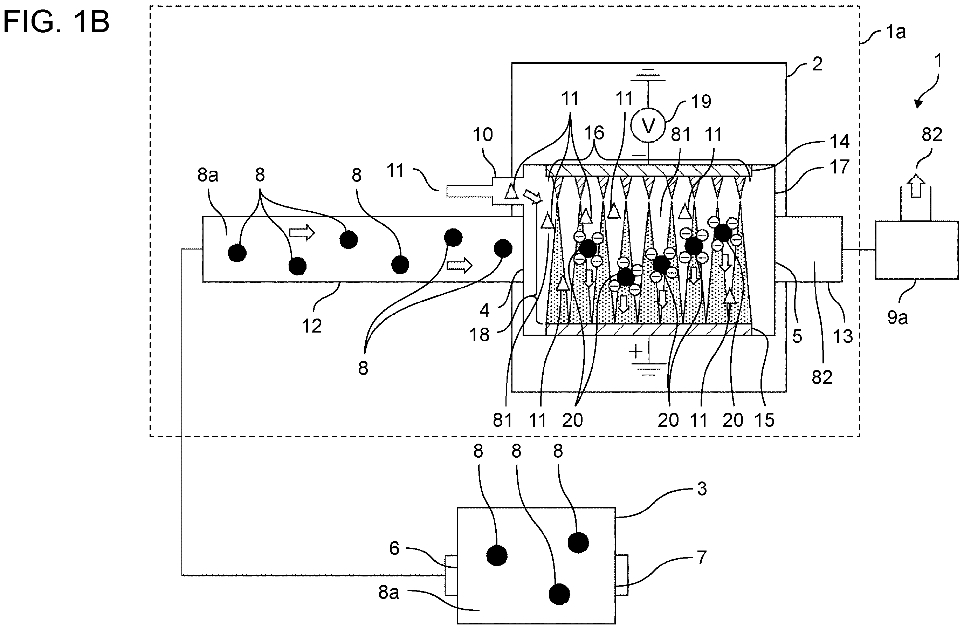

Next, a method of removing product 8 according to a first modification of the first embodiment will be described with reference to FIG. 1B. In the first modification of the first embodiment, only differences from the first embodiment will be described, and thus the same components as those in FIG. 1A are denoted by the same reference numerals, and the description thereof will be omitted.

FIG. 1B is a diagram showing a product removing apparatus according to the first modification of the first embodiment of the present invention and a removal system including the product removing apparatus. In the first modification of the first embodiment, supplier 10 is not limited to being disposed at the middle portion of a path of inlet side pipe 12 as shown in FIG. 1A, and supplier 10 may be directly connected to product remover 2 as shown in FIG. 1B. At this time, supplier 10 can communicate the inside of corona discharger 17 of product remover 2 and the outside of product removing apparatus 1a with each other. Therefore, supplier 10 can supply the air atmosphere as an example of high electrical resistance gas 11 to the inside of corona discharger 17. Atmospheric gas 8a is introduced to the inside of corona discharger 17 via inlet side pipe 12.

That is, in the first modification of the first embodiment, atmospheric gas 8a and high electrical resistance gas 11 are introduced to the inside of corona discharger 17 by the suction of suction device 9a and mixed, and mixed gas 81 is generated inside corona discharger 17. Mixed gas 81 generated inside corona discharger 17 passes through corona discharge space 18 by the suction of suction device 9a. That is, when supplier 10 is installed on the path of inlet side pipe 12 or in product remover 2, mixed gas 81 can pass through corona discharge space 18.

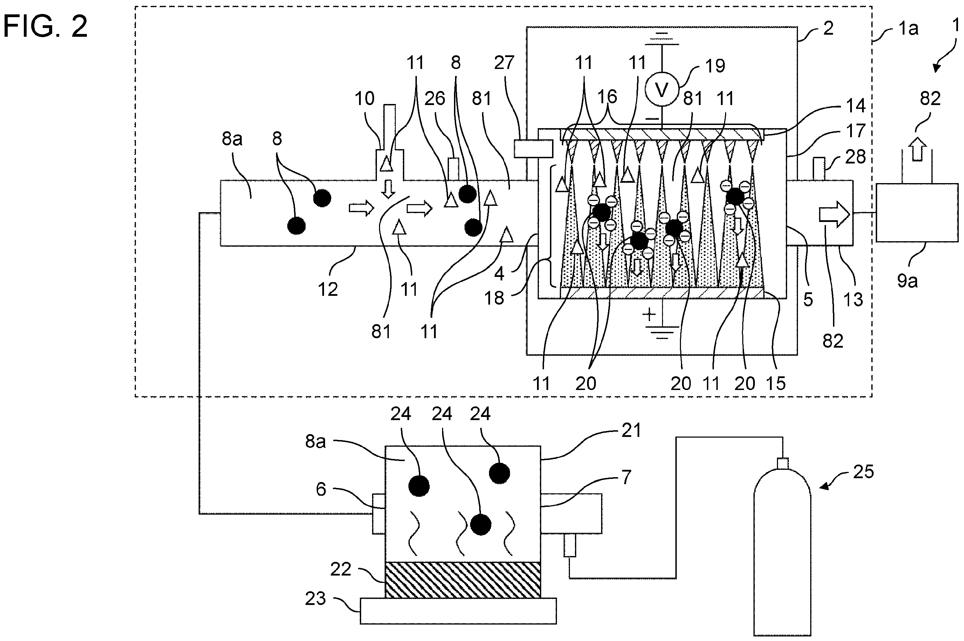

Next, an experimental apparatus and experimental results for confirming the effect of the product removing apparatus according to the first embodiment of the present invention will be described with reference to FIGS. 2 to 7. In the description of the experimental apparatus shown in FIG. 2, only differences from the first embodiment will be described, and thus the same components as those in FIG. 1A are denoted by the same reference numerals, and the description thereof will be omitted.

FIG. 2 is a diagram showing the experimental apparatus for confirming the effect of product removing apparatus 1a according to the first embodiment of the present invention. In FIG. 2, the product processor is heat-resistant container 21. In this experimental apparatus, in order to simulate the atmosphere inside the reflow furnace as the product processor, rosin 22 was put into heat-resistant container 21, and heat-resistant container 21 was heated by heater 23 to generate rosin particles 24.

A 90.0% dehydroabietic acid product available from FUJIFILM Wako Pure Chemical Corporation was used as rosin 22. With regard to physical properties, the rosin has a melting point of 172°C, and turns into a gas at a temperature of about 200°C to 400°C. Rosin particles 24 were generated under the above conditions to simulate a furnace temperature in a primary heat zone of the actual reflow furnace, and a flow rate of a gas actually introduced into product remover 2.

In addition, the atmosphere inside heat-resistant container 21 was filled with nitrogen by nitrogen supplier 25 to have a low oxygen concentration of 0.1% (in other words, 1000 ppm).

In the experiment, supplier 10 was opened to allow the air atmosphere including oxygen as high electrical resistance gas 11 flow therein, and an oxygen concentration in corona discharge space 18 of product remover 2 was increased. Inlet side measurement port 26 was provided between supplier 10 of inlet side pipe 12 and remover side inlet 4. A zirconia-type oxygen analyzer LC-450D manufactured by TORAY ENGINEERING D SOLUTIONS Co., Ltd. was connected to inlet side measurement port 26, and the oxygen concentration was measured. A voltage value during the corona discharge in product remover 2 was measured when the oxygen concentration inside product remover 2 was 3.0%, 1.0%, 0.3%, and 0.2%. A current value during the measurement was 3 mA.

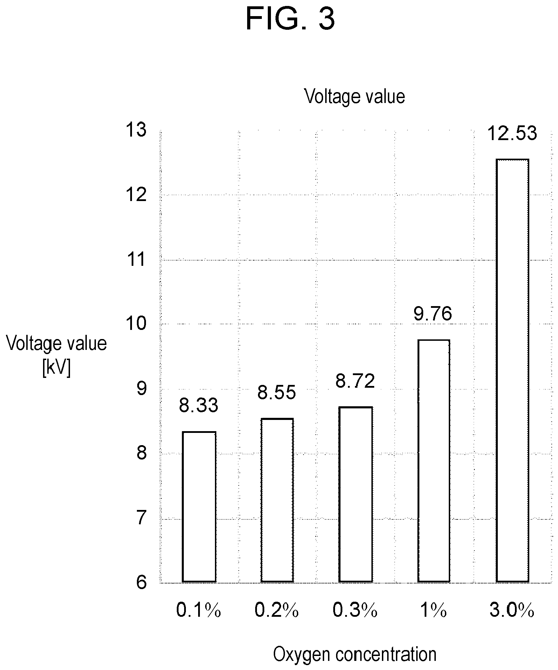

FIG. 3 is a graph showing a relationship between the oxygen concentration and the voltage value during the corona discharge. When the oxygen concentration was 0.1%, the voltage value was 8.33 kV. When the oxygen concentration was 3.0%, the voltage value was 12.5 kV. That is, the graph shows that as the oxygen concentration increases, the voltage value during the corona discharge can be increased.

Next, a relationship between the number of electrode needles performing the corona discharge in the experiment and the voltage value was investigated. Since the electrode needles performing the corona discharge emit bluish white light, the number of electrode needles performing the corona discharge was referred to as the number of lighting, a ratio of the number of lighting to the total number of electrode needles inside corona discharger 17 was referred to as a lighting rate, and the lighting rate when the voltage value was actually changed was measured. For the measurement, as shown in FIG. 2, observation window 27 for confirming the number of lighting of the electrode needles was provided, and a change in the number of lighting of the electrode needles was measured from observation window 27.

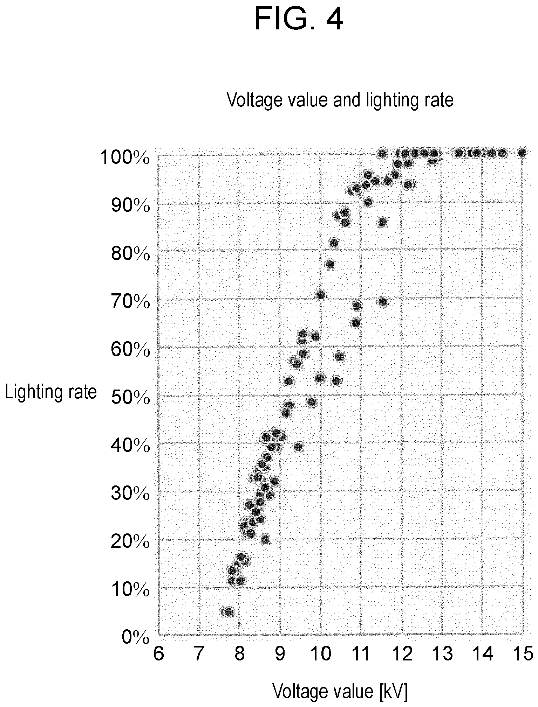

FIG. 4 is a graph showing a relationship between the voltage value and the lighting rate. It can be seen that as the voltage value increases, the lighting rate increases. When the voltage value was around 8 kV, the lighting rate was around 10%. When the voltage value was 12 kV or more, the lighting rate was almost 100%.

Next, the removal efficiency of the product when the lighting rate was changed was investigated by experiment. Outlet side measurement port 28 was further installed in a middle portion of outlet side pipe 13. Inlet side measurement port 26 and outlet side measurement port 28 were connected to a real-time engine exhaust particle sizer EEPS3090 manufactured by TSI. In the experiment, a particle weight per unit volume of the gas on the inlet side and a particle weight per unit volume of the gas on the outlet side were respectively measured, and a collection rate of the product was obtained based on a difference between the measured particle weights, thereby calculating a removal rate of the product.

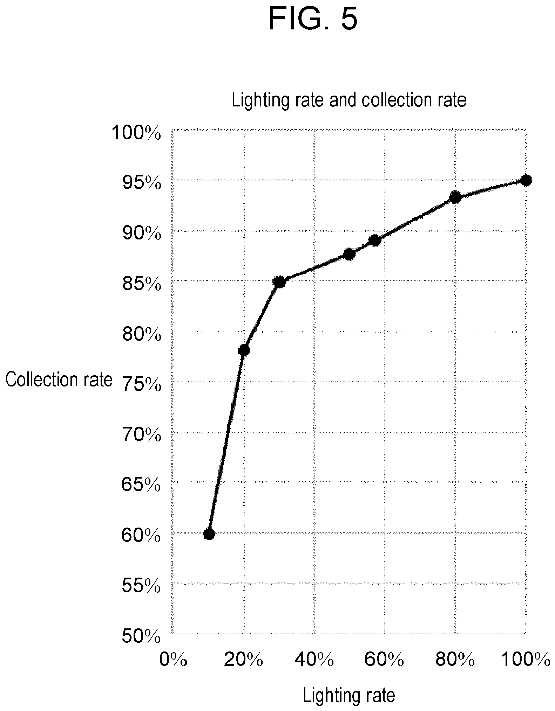

FIG. 5 is a graph showing a relationship between the lighting rate and the removal rate (collection rate). As the lighting rate increases, the removal rate increases. When the lighting rate was 10%, the removal rate was about 60%. When the lighting rate was 100%, the removal rate was about 95%.

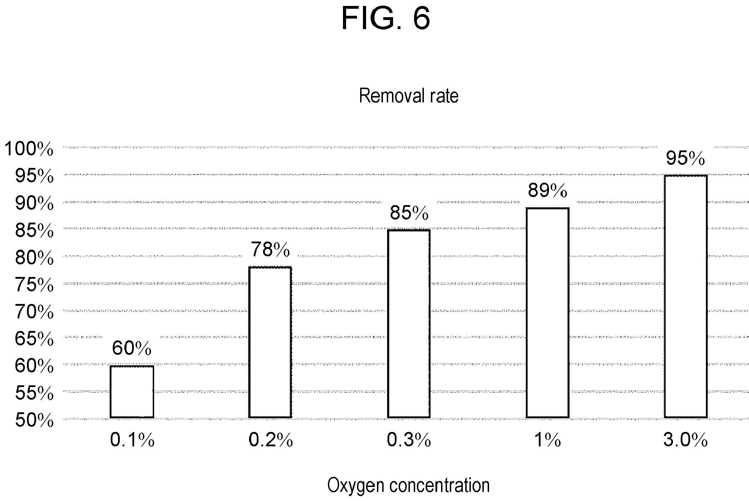

FIG. 6 is a graph showing a relationship between the oxygen concentration and the removal rate. The relationship shown in FIG. 6 was obtained based on the relationships between the experimental results shown in FIGS. 3, 4, and 5. As shown in FIG. 6, the removal rate increases as the oxygen concentration increases. For example, assuming that the atmospheric gas from which the product is removed is returned to the inside of the reflow furnace, when a required minimum removal rate at which the cleaning effect of the inside of the reflow furnace can be exhibited is set to 70% or more, the removal rate is 78% when the oxygen concentration is 0.2% (in other words, 2000 ppm). Therefore, when the required minimum removal rate at which the cleaning effect of the inside of the reflow furnace can be exhibited is set to 70% or more, a required minimum oxygen concentration is 2000 ppm. As a result, if a mixing process is performed so that an oxygen concentration of mixed gas 81 in a removing process is 2000 ppm or more, the above predetermined effect can be more reliably achieved.

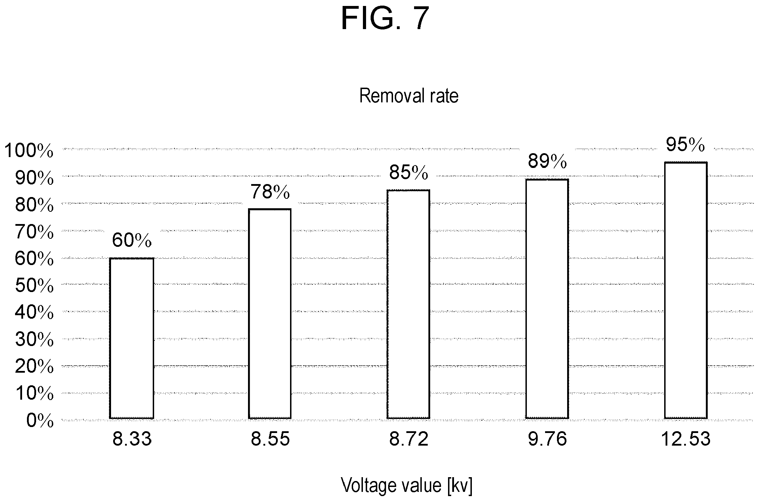

FIG. 7 is a graph showing a relationship between the voltage value and the removal rate. The relationship shown in FIG. 7 was obtained based on the relationships between the experimental results shown in FIGS. 3, 4, and 5. As shown in FIG. 7, as the voltage value increases, the removal rate increases. For example, assuming that the atmospheric gas from which the product is removed is returned to the inside of the reflow furnace, when the required minimum removal rate at which the cleaning effect of the inside of the reflow furnace can be exhibited is set to 70% or more, the removal rate is 78% when the voltage value is 8.55 kV. Therefore, in order to obtain the removal rate at which the required minimum removal rate is 70% or more, the voltage value of 8.5 kV or more is sufficient. These voltage values were eigenvalues of specimens used in the present experiment. A distance between the electrode needles and the ground electrode of the specimen used in this experiment was 25 mm. Therefore, in order to obtain the removal rate at which the required minimum removal rate is 70% or more, a voltage (electric field) of 0.35 kV/mm or more may be applied per unit distance.

### Second Modification

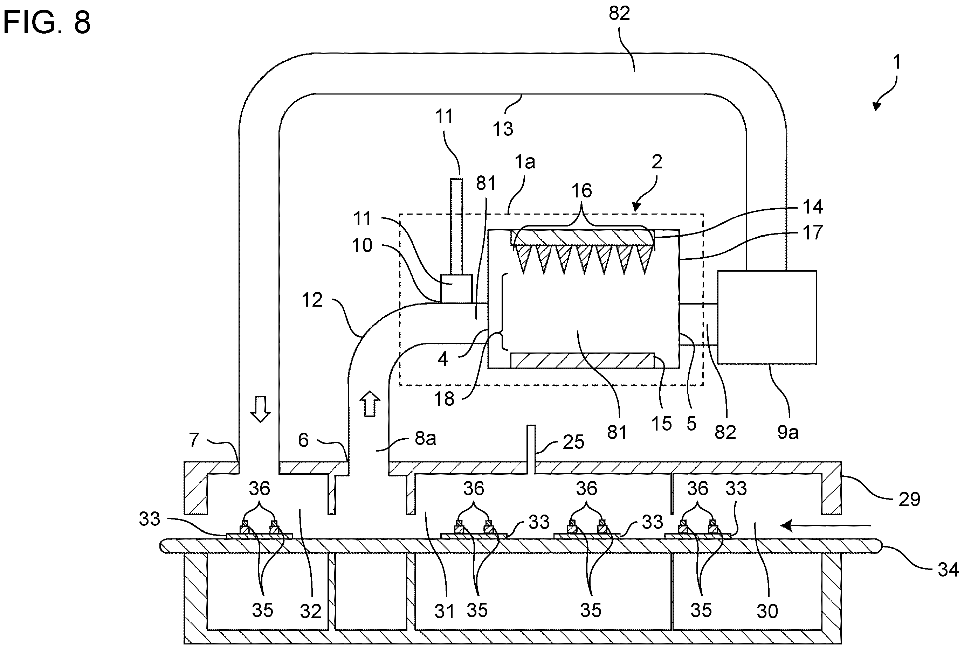

Next, a second modification of the first embodiment will be described with reference to FIG. 8. In the second modification of the first embodiment, only differences from the first embodiment will be described, and thus the same components as those in FIG. 1A are denoted by the same reference numerals, and the description thereof will be omitted.

FIG. 8 is a diagram showing a case in which product removing apparatus 1a is applied to a reflow furnace as the second modification of the first embodiment according to the present invention. In FIG. 8, product removing apparatus 1a is a range surrounded by a broken line. Reflow furnace 29 includes preheat zone 30, primary heat zone 31, and cooling zone 32. Circuit board 33 is conveyed by conveyor 34 from an inlet of reflow furnace 29, and sequentially passes through preheat zone 30, primary heat zone 31, and cooling zone 32. Nitrogen supplier 25 is provided in primary heat zone 31 and supplies nitrogen which is an inert gas. Solder paste 35 is applied to any portion of circuit board 33, and electronic components 36 are placed on solder paste 35. Components included in solder paste 35 applied to circuit board 33 are mainly composed of a solder component, a solvent, and a flux component, in preheat zone 30, the solvent is mainly volatilized, and in primary heat zone 31, the flux component is volatilized and evaporated, and the solder component is melted. In cooling zone 32, the remaining solder component is solidified. Through the above processes, electronic components 36 and circuit board 33 are electrically bonded to each other via the solder.

In reflow furnace 29, since primary heat zone 31 is a portion contaminated most by the flux component, processor side outlet 6 is installed in a zone between primary heat zone 31 and cooling zone 32. Processor side outlet 6 is connected to remover side inlet 4 of product remover 2 via inlet side pipe 12. Processor side outlet 6 may be installed in a zone in reflow furnace 29 other than the zone between primary heat zone 31 and cooling zone 32.

Processor side inlet 7 is installed in cooling zone 32. Processor side inlet 7 is connected to remover side outlet 5 of product remover 2 via outlet side pipe 13. Suction device 9a is installed in the halfway of outlet side pipe 13. That is, suction device 9a sucks atmospheric gas 8a inside reflow furnace 29 via inlet side pipe 12, product remover 2, and outlet side pipe 13. Atmospheric gas 8a sucked by suction device 9a is discharged from suction device 9a, and is sent to cooling zone 32 of reflow furnace 29 via outlet side pipe 13 as the return process. By returning atmospheric gas 8a sucked from reflow furnace 29 to reflow furnace 29 in the return process, a predetermined temperature profile can be achieved, and an amount of nitrogen supplied to reflow furnace 29 can be reduced.

Further, in reflow furnace 29, nitrogen is supplied from nitrogen supplier 25 to primary heat zone 31 in which the inert gas is required. Therefore, in the return process, even in the configuration in which post-removal gas 82 having an oxygen concentration higher than that of atmospheric gas 8a is returned to cooling zone 32, the nitrogen atmosphere flows from primary heat zone 31 to cooling zone 32. Therefore, post-removal gas 82 does not enter primary heat zone 31. That is, it is possible to increase the oxygen concentration inside product remover 2 while maintaining primary heat zone 31 in the low oxygen atmosphere.

According to such a configuration, in an suction process, atmospheric gas 8a having flux is sucked into corona discharge space 18 so as to be discharged from the primary heat zone inside reflow furnace 29, flow furnace 41, or batch furnace 38. As a result, it is possible to improve a cleaning effect on a most contaminated portion inside product processor 3 contaminated by the flux.

In addition, according to such a configuration, after the removing process, the return process is further included. In the return process, post-removal gas 82 after being subjected to the removing process is moved from product remover 2 to cooling zone 32 inside reflow furnace 29, flow furnace 41, or batch furnace 38. As a result, an amount of inert gas such as nitrogen supplied into reflow furnace 29, flow furnace 41, or batch furnace 38 can be reduced.

### Third Modification

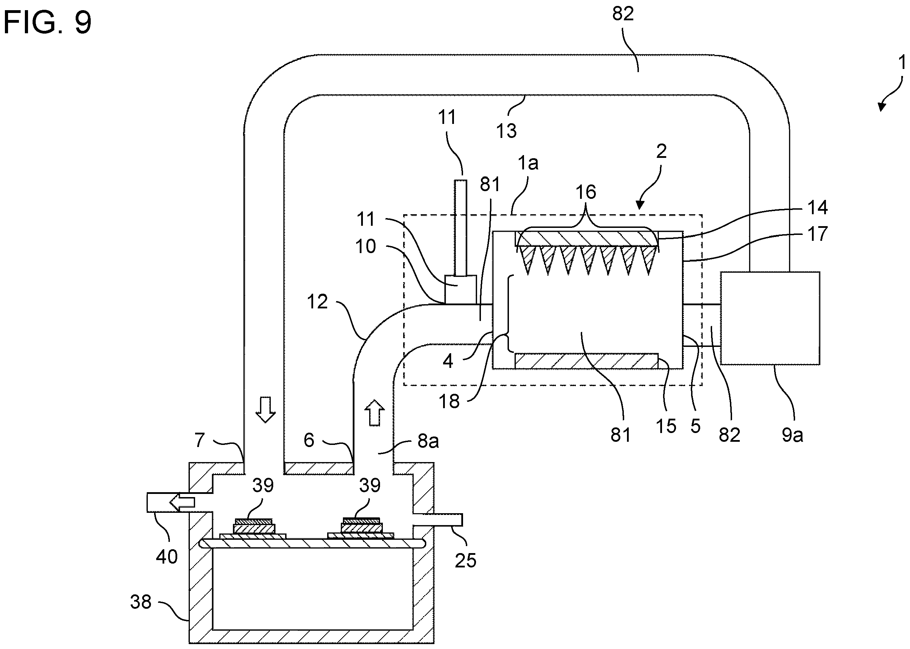

Next, a third modification of the first embodiment will be described with reference to FIG. 9. FIG. 9 is a diagram showing a case in which the present invention is applied to a batch furnace. In FIG. 9, the same components as those in FIG. 1A or FIG. 8 are denoted by the same reference numerals, and the description thereof will be omitted.

Batch furnace 38 heats an interior of batch furnace 38 to a high temperature, thereby firing fired substance 39 such as a circuit board. In order to discharge a gas generated at the time of firing, discharge port 40 is provided in batch furnace 38. Atmosphere inside batch furnace 38 is maintained in the nitrogen atmosphere by nitrogen supplied from nitrogen supplier 25. Batch furnace 38 is provided with processor side outlet 6 and processor side inlet 7. Processor side outlet 6 is connected to remover side inlet 4 of product remover 2 via inlet side pipe 12.

Processor side inlet 7 is connected to remover side outlet 5 of product remover 2 via outlet side pipe 13. Suction device 9a is installed in the halfway of outlet side pipe 13. That is, suction device 9a sucks atmospheric gas 8a inside batch furnace 38 via inlet side pipe 12, product remover 2, and outlet side pipe 13. Atmospheric gas 8a sucked by suction device 9a is discharged from suction device 9a, and is sent to batch furnace 38 via outlet side pipe 13 as the return process. By returning atmospheric gas 8a sucked from batch furnace 38 to batch furnace 38 in the return process, a predetermined temperature profile is achieved, and an amount of nitrogen supplied to batch furnace 38 is reduced.

Further, nitrogen is constantly supplied from nitrogen supplier 25 to the inside of batch furnace 38 in which the inert gas is required. That is, nitrogen supplied to the inside of batch furnace 38 circulates in batch furnace 38, and a certain amount of nitrogen is discharged from discharge port 40. Therefore, even in the configuration in which post-removal gas 82 having an oxygen concentration higher than that of atmospheric gas 8a is returned to the inside of batch furnace 38, the oxygen concentration in product remover 2 can be increased while the inside of batch furnace 38 is maintained in the low oxygen atmosphere.

### Fourth Modification

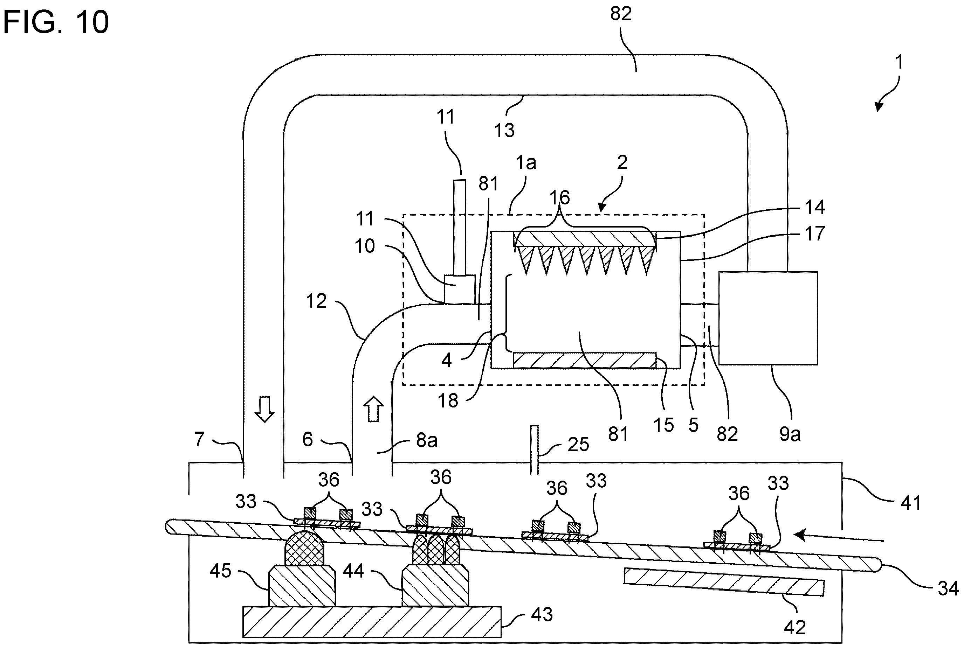

Next, a fourth modification of the first embodiment will be described with reference to FIG. 10. FIG. 10 is a diagram showing a case in which the present invention is applied to a flow furnace. In FIG. 10, the same components as those in FIG. 1A, FIG. 8, or FIG. 9 are denoted by the same reference numerals, and the description thereof will be omitted.

Flow furnace 41 includes conveyor 34 for conveying circuit board 33, preheat heater 42, and solder bath 43. Circuit board 33 is conveyed by conveyor 34 from an inlet of flow furnace 41, and sequentially passes through preheat heater 42, primary jet 44, and secondary jet 45. Atmosphere inside flow furnace 41 is maintained in the nitrogen atmosphere by nitrogen supplied from nitrogen supplier 25. Electronic components 36 are installed on circuit board 33. Circuit board 33 and electronic components 36 heated by preheat heater 42 are conveyed by conveyor 34, and pass through primary jet 44 and secondary jet 45 which spray melted solder from solder bath 43. As a result, the solder flows into metal portions of circuit board 33 and electronic components 36, and circuit board 33 and electronic components 36 are electrically bonded to each other via the solder.

In flow furnace 41, processor side outlet 6 is installed between primary jet 44 and secondary jet 45. Processor side outlet 6 is connected to remover side inlet 4 of product remover 2 via inlet side pipe 12. Processor side outlet 6 may be installed at a portion in flow furnace 41 other than between primary jet 44 and secondary jet 45.

In flow furnace 41, processor side inlet 7 is installed on a downstream side of secondary jet 45. Processor side inlet 7 is connected to remover side outlet 5 of product remover 2 via outlet side pipe 13. Suction device 9a is installed in the halfway of outlet side pipe 13. That is, suction device 9a sucks atmospheric gas 8a inside flow furnace 41 via inlet side pipe 12, product remover 2, and outlet side pipe 13. Atmospheric gas 8a sucked by suction device 9a is discharged from suction device 9a, and is sent to the vicinity of an outlet of flow furnace 41 via outlet side pipe 13 as the return process. By returning atmospheric gas 8a sucked from flow furnace 41 to flow furnace 41 in the return process, a predetermined temperature profile is achieved, and an amount of nitrogen supplied to flow furnace 41 is reduced.

In flow furnace 41, nitrogen is supplied from nitrogen supplier 25 provided on an upstream side of primary jet 44 on which the inert gas is required to the inside of flow furnace 41. Therefore, in the return process, even in the configuration in which post-removal gas 82 having an oxygen concentration higher than that of atmospheric gas 8a is returned to the vicinity of the outlet of flow furnace 41, the nitrogen atmosphere flows from primary jet 44 to the vicinity of the outlet. Therefore, post-removal gas 82 does not enter primary jet 44. That is, it is possible to increase the oxygen concentration inside product remover 2 while maintaining the vicinity of primary jet 44 in the low oxygen atmosphere.

In addition, according to the product removing method and the product removing apparatus of the first embodiment, in the removing process, the electric field of 0.35 kV/mm or more is generated in corona discharge space 18. According to such a removing method, the removal efficiency of product 8 in corona discharger 17 inside product remover 2 is improved as compared with a case in which an electric field less than 0.35 kV/mm is generated. As a result, when post-removal gas 82 is exhausted to the outside from removing apparatus 1a, the cleaning effect of the inside of the pipe duct for outdoor exhausting is improved. In addition, when post-removal gas 82 is returned to the processing chamber in the return process of returning post-removal gas 82 to processor side inlet 7 of product processor 3 or the like, the cleaning effect of the inside of product processor 3 can be improved.

According to the product removing method of the first embodiment, the mixing process is performed such that the oxygen concentration of mixed gas 81 in the removing process is 2000 ppm or more. According to such a removing method, the removal efficiency of product 8 in corona discharger 17 inside product remover 2 is improved as compared with a case in which high electrical resistance gas 11 is not supplied from supplier 10. As a result, it is possible to improve the cleaning effect of the inside of product processor 3.

In addition, according to the flux removing method according to the first embodiment, product 8 is the flux, and product processor 3 is reflow furnace 29, flow furnace 41, or batch furnace 38 used in the low oxygen atmosphere. The flux removing method includes the mixing process, and the removing process described in the above product removing method. According to the removing method, when post-removal gas 82 is exhausted to the outside from removing apparatus 1a, the cleaning effect of the inside of the pipe duct for outdoor exhausting is improved. In addition, when post-removal gas 82 is returned to the processing chamber in the return process of returning post-removal gas 82 to processor side inlet 7 of product processor 3 or the like, the cleaning effect of the inside of product processor 3 contaminated by the flux can be improved.

In addition, according to the product removing apparatus of the first embodiment, product processor 3 is reflow furnace 29, flow furnace 41, or batch furnace 38 used in the low oxygen atmosphere. According to such a configuration, it is possible to improve the cleaning effect of the inside of product processor 3 contaminated by product 8.

### Second Embodiment

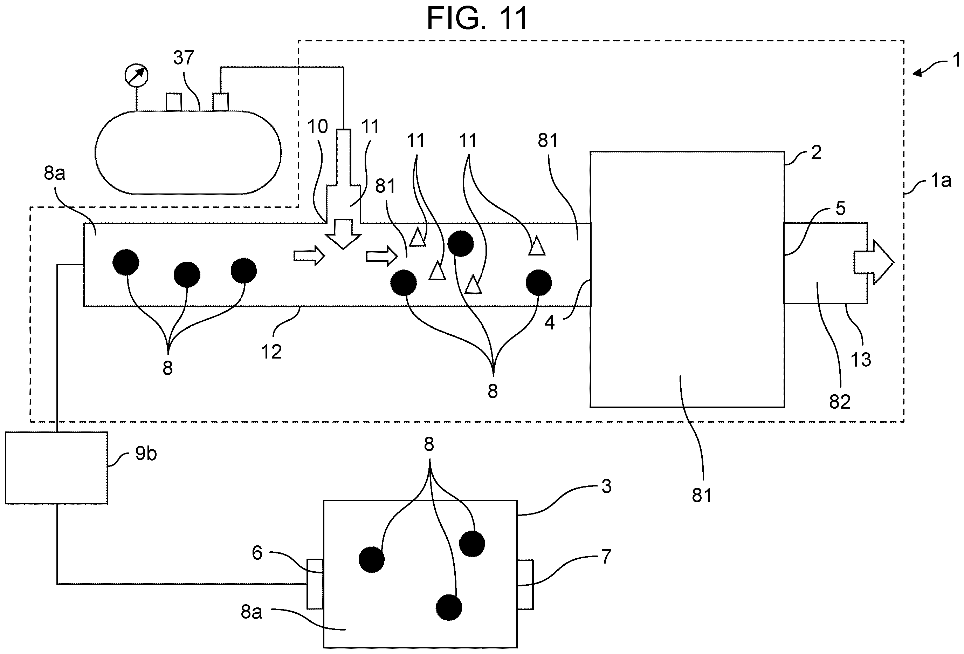

Next, a second embodiment according to the present invention will be described with reference to FIG. 11. The second embodiment illustrates that the present invention is not limited to the configuration in which the inside of the pipe has a negative pressure, but may have a configuration in which the inside of the pipe has a positive pressure. FIG. 11 is a diagram showing a product removing apparatus according to the second embodiment of the present invention and a removal system. In the second embodiment, only differences from the first embodiment will be described, and thus the same components as those in FIG. 1A are denoted by the same reference numerals, and the description thereof will be omitted.

In the second embodiment, suction pressurization device 9b is connected to processor side outlet 6 of product processor 3 and inlet side pipe 12. Suction pressurization device 9b is, for example, a pressurization pump. Remover side inlet 4 of product remover 2 is connected to suction pressurization device 9b via inlet side pipe 12. When suction pressurization device 9b is operated, a negative pressure is generated on an upstream side of suction pressurization device 9b, that is, between suction pressurization device 9b and processor side outlet 6. A positive pressure is generated on a downstream side of suction pressurization device 9b. Therefore, atmospheric gas 8a including product 8 is discharged from the inside of product processor 3. On the downstream side of suction pressurization device 9b, atmospheric gas 8a, high electrical resistance gas 11, and mixed gas 81 are pressurized to be sent out, and introduced into corona discharge space 18.

The pressure inside inlet side pipe 12 is a positive pressure. Therefore, by pressurizing high electrical resistance gas 11 to a pressure higher than the pressure inside inlet side pipe 12, high electrical resistance gas 11 is supplied from supplier 10 to the inside of inlet side pipe 12.

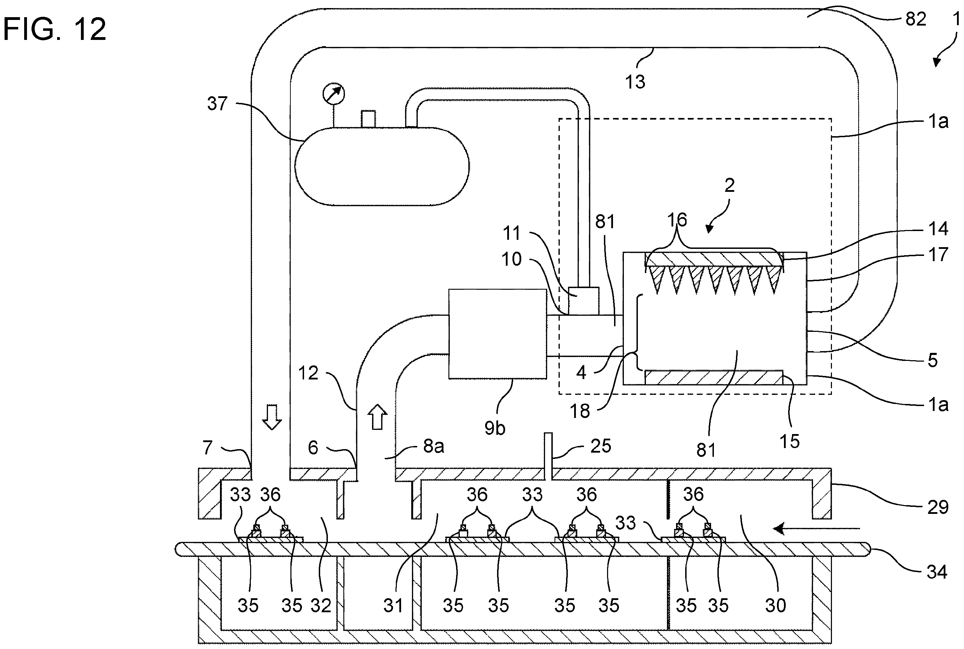

Next, a first modification of the second embodiment will be described with reference to FIG. 12. In the first modification of the second embodiment, only differences from the second modification of the first embodiment will be described, and thus the same components as those in FIG. 1A and FIG. 8 are denoted by the same reference numerals, and the description thereof will be omitted.

FIG. 12 is a diagram showing a removal system in a case in which product removing apparatus 1a is applied to a reflow furnace as the first modification of the second embodiment according to the present invention. Supplier 10 is connected to inlet side pipe 12 and pressurizing mechanism 37. Since suction pressurization device 9b is installed on an upstream side of supplier 10, the pressure inside inlet side pipe 12 is a positive pressure. Therefore, by pressurizing high electrical resistance gas 11 to a pressure higher than the pressure inside inlet side pipe 12, high electrical resistance gas 11 is supplied from supplier 10 to the inside of inlet side pipe 12. As a matter of course, even when suction pressurization device 9b is not provided on the upstream side of supplier 10, this configuration may also be adopted as long as high electrical resistance gas 11 pressurized by supplier 10 is required.

According to the product removing method and the product removing apparatus of the second embodiment, atmospheric gas 8a can be discharged from product processor 3 through inlet side pipe 12 before the mixing process, and high electrical resistance gas 11 can be supplied. The method further includes an suction pressurization process of pressurizing and sending out discharged atmospheric gas 8a, supplied high electrical resistance gas 11, and mixed gas 81 generated in the mixing process, such that the above gases are introduced into corona discharge space 18.

According to such a removing method and the product removing apparatus, even when the inside of inlet side pipe 12 has a positive pressure, the voltage applied to corona discharger 17 inside product remover 2 can be increased, the potential difference becomes large, and the removal efficiency of product 8 is improved. As a result, it is possible to improve the cleaning effect of the inside of product processor 3.

### Third Embodiment

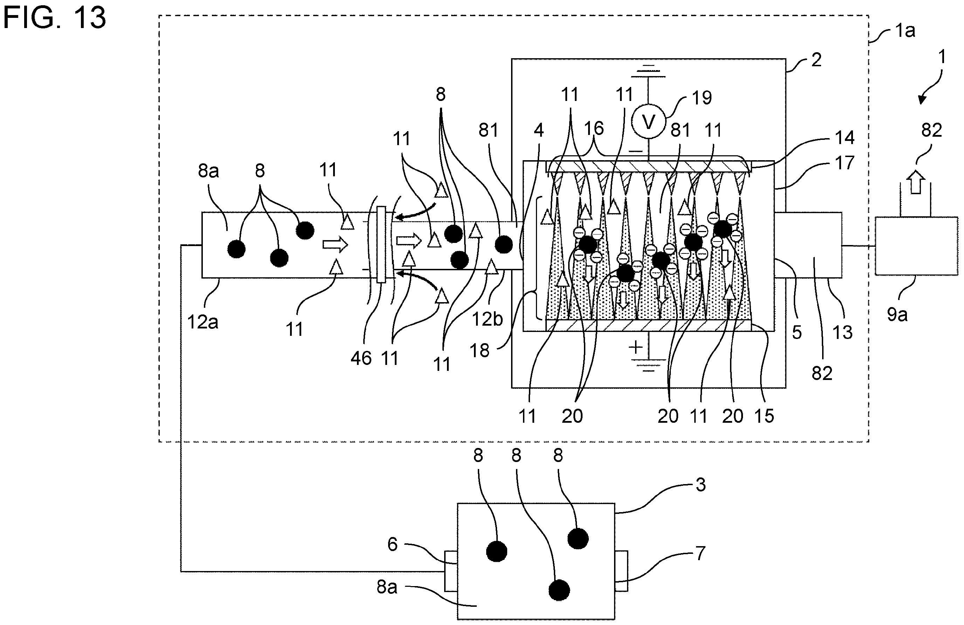

Next, a third embodiment according to the present invention will be described with reference to FIG. 13. FIG. 13 is a diagram showing a product removing apparatus according to the third embodiment of the present invention. In the third embodiment, only differences from the first embodiment will be described, and thus the same components as those in FIG. 1A are denoted by the same reference numerals, and the description thereof will be omitted.

Inlet side pipe 12 includes a plurality of pipe members 12a, 12b. The pipe members 12a, 12b are connected to each other by hose band 46. An inner diameter of pipe member 12a is larger than an outer diameter of pipe member 12b. As shown in FIG. 13, when hose band 46 is loosened, a gap is generated between an inner surface of pipe member 12a and an outer surface of pipe member 12b. This gap is supplier 10. That is, the gap can function as supplier 10 capable of adjusting the amount of the air atmosphere flowing into the pipe by adjusting the gap between the pipe members 12a, 12b according to a degree of loosening of hose band 46.

According to the product removing apparatus of the third embodiment, the pressure inside inlet side pipe 12 is the negative pressure, inlet side pipe 12 includes the plurality of pipe members 12a, 12b, and the plurality of pipe members 12a, 12b are connected to each other by hose band 46. In addition, a connection portion between the pipe members 12a, 12b is supplier 10. According to such a configuration, high electrical resistance gas 11 can be supplied only by loosening hose band 46.

### Fourth Embodiment

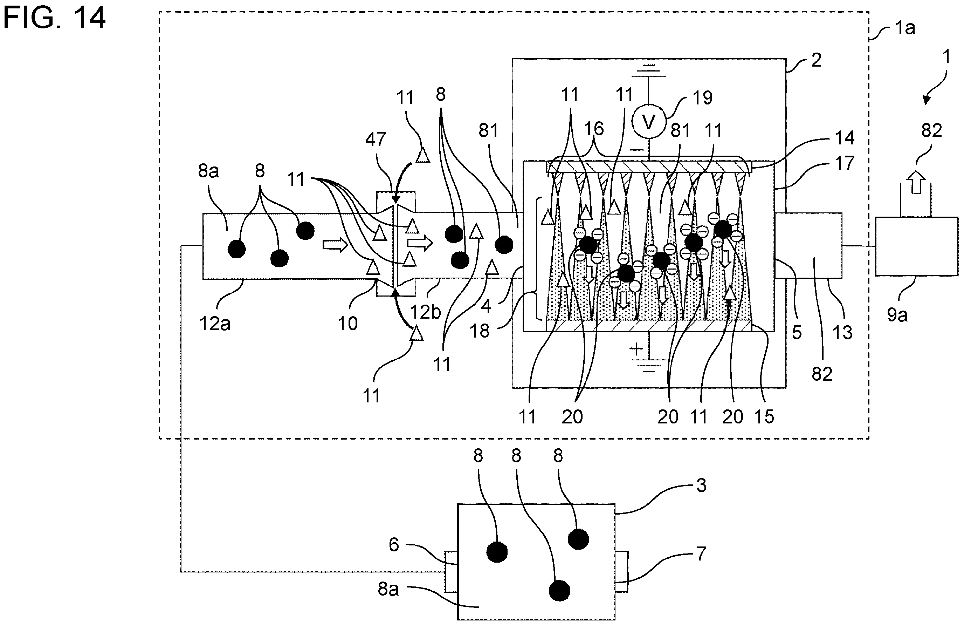

Next, a fourth embodiment according to the present invention will be described with reference to FIG. 14. FIG. 14 is a diagram showing a product removing apparatus according to the fourth embodiment of the present invention. In the fourth embodiment, only differences from the first embodiment will be described, and thus the same components as those in FIG. 1A are denoted by the same reference numerals, and the description thereof will be omitted.

Inlet side pipe 12 includes pipe members 12a, 12b. Pipe members 12a, 12b are connected to each other by clamp 47 such that end surfaces thereof facing each other are abutted against each other. As shown in FIG. 14, when clamp 47 is loosened, a gap is generated between the end surfaces of the pipe members 12a, 12b that face each other. This gap is supplier 10. That is, the gap can function as supplier 10 capable of adjusting the amount of the air atmosphere flowing into the pipe by adjusting the gap between the pipe members 12a, 12b according to a degree of loosening of clamp 47.

According to the product removing apparatus of the fourth embodiment, the pressure inside inlet side pipe 12 is the negative pressure, inlet side pipe 12 includes the plurality of pipe members 12a, 12b, and the plurality of pipe members 12a, 12b are connected to each other by clamp 47. In addition, a connection portion between pipe member 12a and pipe member 12b is supplier 10. According to such a configuration, high electrical resistance gas 11 can be supplied only by loosening clamp 47.

According to the embodiments of the present invention, the mixed gas is introduced into the corona discharge space of the product remover, in which the mixed gas is generated by mixing the atmospheric gas including the product generated in the processing chamber and the high electric resistance gas having an electric resistance higher than that of the atmospheric gas. By introducing the mixed gas into the corona discharge space, the voltage applied to the corona discharge space can be increased as compared with the case where only the atmospheric gas is introduced into the corona discharge space as in the related art. Therefore, a larger amount of the product is removed from the mixed gas introduced into the corona discharge space by the corona discharge method than that in the related art. Therefore, the removal efficiency of the product is improved as compared with the case where only the atmospheric gas including the product is introduced into the corona discharge space. Therefore, for example, when the gas is exhausted to the outside from the removing apparatus, it is possible to prevent the contamination in which the reaction product is attached to the inside of the pipe duct for outdoor exhausting. When the gas is returned from the removing apparatus to the furnace, the cleaning effect of the inside of the processing chamber can be improved.

The effects of the respective embodiments and modifications can be achieved by appropriately combining any embodiment or modification among the various embodiments and modifications described above. In addition, the embodiments can be combined, the examples can be combined, or the embodiments and examples can be combined, and features in different embodiments or examples can be combined.

The product removing method, the flux removing method, and the product removing apparatus according to the above aspects of the present invention can improve a product removing effect in the electrostatic precipitation scheme even when an atmosphere in a processing space is at a low oxygen concentration, and can be applied to maintain a degree of cleaning of the processing space.

## Claims

1. A product removing method of introducing an atmospheric gas into a product remover including a corona discharge space to remove a product from the atmospheric gas, the product being generated inside a processing chamber under a low oxygen atmosphere, the method comprising:
mixing the atmospheric gas with a high electric resistance gas to generate a mixed gas in a pipe or the corona discharge space, the pipe being connected between the processing chamber and the corona discharge space, the atmospheric gas being discharged from the processing chamber via the pipe, the high electric resistance gas having an electric resistance higher than an electric resistance of the atmospheric gas; and
removing the product from the mixed gas by a corona discharge method in the corona discharge space into which the mixed gas is introduced via the pipe or in which the mixed gas is generated.

2. The product removing method according to claim 1, wherein
the high electrical resistance gas used in the mixing process is air atmosphere, oxygen, a diatomic molecular gas having a double bond or less, or a rare gas.

3. The product removing method according to claim 1 or 2, wherein
in the removing process, an electric field of 0.35 kV/mm or more is generated in the corona discharge space.

4. The product removing method according to any one of claims 1 to 3, wherein
the mixing process is performed such that an oxygen concentration of the mixed gas in the removing process is 2000 ppm or more.

5. The product removing method according to any one of claims 1 to 4, wherein
in the mixing process, the high electrical resistance gas is supplied into the pipe from a supplier connected to a middle portion of the pipe, the mixing process is performed in the pipe to generate the mixed gas, and the mixed gas is introduced into the corona discharge space via the pipe.

6. The product removing method according to any one of claims 1 to 5, further comprising:
a suction process in which
the atmospheric gas is discharged from the processing chamber toward the corona discharge space via the pipe before the mixing process,
the high electric resistance gas is sucked so as to be supplied to the pipe or the corona discharge space, and
when the high electrical resistance gas is supplied to the pipe, the suction process is performed to suck the mixed gas generated in the mixing process, such that the mixed gas is introduced into the corona discharge space, or,
when the high electric resistance gas is supplied to the corona discharge space, the suction process is performed to suck the atmospheric gas and the high electric resistance gas, such that the high electric resistance gas is directly introduced into the corona discharge space while the atmospheric gas is introduced into the corona discharge space via the pipe.

7. The product removing method according to any one of claims 1 to 5, further comprising:
an suction pressurization process of sucking the atmospheric gas from the processing chamber so as to discharge the atmospheric gas toward the corona discharge space via the pipe before the mixing process, and pressurizing and sending out the high electrical resistance gas so as to supply the high electrical resistance gas to the pipe or the corona discharge space.

8. The product removing method according to claim 6, wherein
a suction pump or a suction fan is used in the suction process.

9. The product removing method according to claim 7, wherein
in the suction pressurization process, a pressurization pump is disposed so as to be connected to the processing chamber via the pipe, and the pressurization pump is used so as to suck the atmospheric gas, such that the atmospheric gas is discharged from the processing chamber, and to pressurize and send out the discharged atmospheric gas toward the corona discharge space via the pipe.

10. A flux removing method comprising:
the mixing process; the removing process; and the suction process, which are according to the product removing method according to claim 6 or 8, wherein
the product is flux, and
the processing chamber is a reflow furnace, a flow furnace, or a batch furnace used in a low oxygen atmosphere.

11. The flux removing method according to claim 10, wherein
in the suction process, the atmospheric gas having the flux is sucked into the corona discharge space, so that the atmospheric gas is discharged from a primary heat zone inside the reflow furnace, the flow furnace, or the batch furnace.

12. A flux removing method comprising:
the mixing process; the removing process; and the suction pressurization process, which are according to the product removing method according to claim 7 or 9, wherein
the product is flux, and
the processing chamber is a reflow furnace, a flow furnace, or a batch furnace used in a low oxygen atmosphere.

13. The flux removing method according to claim 12, wherein
in the suction pressurization process, the atmospheric gas having the flux is sucked into the corona discharge space, so that the atmospheric gas is discharged from a primary heat zone inside the reflow furnace, the flow furnace, or the batch furnace.

14. The flux removing method according to any one of claims 10 to 13, further comprising:
a return process of returning a post-removal gas after being subjected to the removing process from the product remover to a cooling zone inside the reflow furnace, the flow furnace, or the batch furnace after the removing process.

15. A product removing apparatus configured to introduce an atmospheric gas including a product generated inside a processing chamber under a low oxygen atmosphere so as to remove the product included in the atmospheric gas, the product removing apparatus comprising:
a product remover including a corona discharge space in which the product is removed;
a pipe connecting the processing chamber and the product remover; and
a supplier installed on a path of the pipe or the product remover, and configured to supply a high electrical resistance gas having an electric resistance higher than an electric resistance of the atmospheric gas to the pipe or the corona discharge space, wherein
a mixed gas is generated by mixing the atmospheric gas and the high electric resistance gas, and the product is removed from the mixed gas in the corona discharge space that is introduced via the pipe or generated in the corona discharge space.

16. The product removing apparatus according to claim 15, further comprising:
an suction device provided on a downstream side of the product remover, wherein
the suction device sucks the atmospheric gas from the processing chamber into the pipe so as to discharge the atmospheric gas toward the corona discharge space, sucks the high electric resistance gas so as to supply the high electric resistance gas from an outside of the pipe into the pipe or supply the high electric resistance gas from an outside of the corona discharge space into the corona discharge space, sucks the mixed gas so as to introduce the mixed gas into the corona discharge space when the high electric resistance gas is supplied into the pipe, or sucks the atmospheric gas and the high electric resistance gas so as to introduce the high electric resistance gas directly into the corona discharge space while introducing the atmospheric gas into the corona discharge space via the pipe when the high electric resistance gas is supplied into the corona discharge space.

17. The product removing apparatus according to claim 15 or 16, wherein
the processing chamber is a reflow furnace, a flow furnace, or a batch furnace used in a low oxygen atmosphere.

18. The product removing apparatus according to any one of claims 15 to 17, wherein
the high electric resistance gas is an air atmosphere, and the supplier is an open valve having an adjustment valve.

19. The product removing apparatus according to any one of claims 15 to 17, wherein
a pressure inside the pipe is a negative pressure, the pipe includes a plurality of pipe members, the plurality of pipe members are connected to each other by a hose band, the supplier is formed of a portion at which the hose band and the plurality of pipe members overlap each other, and the high electrical resistance gas is supplied from a gap of the portion between the plurality of pipe members according to a degree of loosening of the hose band.

20. The product removing apparatus according to any one of claims 15 to 17, wherein
a pressure inside the pipe is a negative pressure, the pipe includes a plurality of pipe members, the plurality of pipe members are connected to each other by a clamp, the supplier is formed of a portion at which the clamp and the plurality of pipe members overlap each other, and the high electrical resistance gas is supplied from a gap of the portion between the plurality of pipe members according to a degree of loosening of the clamp.

21. The product removing apparatus according to any one of claims 15 to 18, wherein
a pressure inside the pipe is a positive pressure, a pressurizing mechanism that pressurizes the high electrical resistance gas so as to have a pressure higher than the pressure inside the pipe is connected to the supplier, and the high electrical resistance gas pressurized by the pressurizing mechanism is supplied into the pipe.
